# EUROPEAN PATENT APPLICATION

(11) **EP 4 664 364 A1**
(43) Date of publication of application: **17.12.2025**
(21) Application number: 24305918.5
(22) Date of filing: 11.06.2024
(51) Int. Cl.: G06N 10/20, G06N 10/60, G06N 10/80

(54) **METHOD OF SIMULATING EXECUTION OF A QUANTUM ALGORITHM BY USING A CLUSTER OF NON-QUANTUM COMPUTERS**

(71) Applicant: BULL SAS, 78340 Les Clayes-Sous-Bois (FR)
(72) Inventor: GAZDA, Arnaud, 78000 VERSAILLES (FR); CHEAH, Stanley, 78370 PLAISIR (FR); LAMBERT, Cyprien, 78000 VERSAILLES (FR)
(74) Representative: Plasseraud IP

(57) **Abstract**

A method of simulating execution of a quantum algorithm by using a cluster of non-quantum computers (100) comprises implementing a pattern-based diagonalization step before a gate localizing step. A number of SWAP gates added into a quantum circuit used for simulation-executing the algorithm, for converting remote gates into local gates, and a run time value of the quantum algorithm using the cluster are reduced in this way.

## Description

The invention relates to a method of simulating execution of a quantum algorithm by using a cluster of non-quantum computers. As usual in the art, a non-quantum computer also referred to as classical computer is designed to operate through bit-handling, as opposed to a quantum computer which handles qubits for executing a quantum circuit.

### -- BACKGROUND OF THE INVENTION --

Many industrial issues benefit from executing quantum algorithms. This includes algorithms for optimizing industrial processes, in particular for determining corrected settings of production plants in order to compensate for environment variations and parameter time-drifts.

Such quantum algorithms are primarily designed and intended to be executed by quantum computers. But up to now, quantum computers have not achieved high enough computational accuracy, in particular because of noise causes which interfere with nominal operations of existing quantum computers. In such current situation, it is useful simulating execution of quantum algorithms by using non-quantum computers.

However, having a non-quantum computer executing a quantum algorithm is limited to small numbers of implemented qubits, because the number of quantum state amplitude values to handle increases exponentially with the number of qubits: 2^{N} amplitude values for each quantum state with N qubits, N being a non-zero integer. Therefore, it is crucial implementing multiple non-quantum computers which are interconnected as a cluster for simulating execution of quantum algorithms with large qubit numbers. Commonly in the art, non-quantum computers interconnected as a cluster are referred to as computing nodes, or nodes for short. Such non-quantum computer cluster can then provide sufficient computing resources, but its collective operation is limited by the communication resources which are available to the computers within the cluster.

In a known manner, a quantum state is a tensor-product of ordered qubits, comprising local qubits and remote qubits when handled by a non-quantum computer cluster. Indeed with such structure, the amplitude values of any quantum state that correspond to two tensor-product base states which differ through base states of a single one of the qubits are stored either in a same one of the nodes if the differentiating qubit is local, or stored in two separate ones of the nodes if the differentiating qubit is remote. Using common quantum state notation, any quantum state has respective amplitude values for the tensor-product base states 100...>, 101...>, |10...>, |11...>, etc. N being again the qubit number in the tensor product, each quantum state is thus described with 2^{N} amplitude values each corresponding to a respective one of the tensor-product base states. For example, when using 2ⁿ nodes to store a quantum state, n being another non-zero integer but less than N, each node is assigned to the tensor-product base states that begin with a respective identified sequence of qubit base states, and all quantum state amplitude values that correspond to this beginning sequence are stored in this node for each quantum state. Then, for n equalling 2, the quantum state amplitude values that correspond to tensor-product base states beginning with |00...> are stored in a first node of the cluster, those corresponding to tensor-product base states beginning with |01...> are stored in a second cluster node, those corresponding to |10...> are stored in a third one, and those corresponding to |11...> in a fourth one. Similar storage distribution rule is applied to any n-value: the n first qubits in the tensor product are remote qubits, and the n+1 to N remaining ones are local qubits.

The quantum algorithm is implemented as a quantum circuit that is comprised of a sequence of ordered gates which involve each at least one of the qubits. Any gate operating onto a quantum state modifies at least one amplitude value of this quantum state, and each qubit in the tensor product that is concerned with such modification is commonly called target qubit. However, there are gates, referred to as controlled gates, that modify the amplitude values according to the target qubit(s) only if each one of other qubits which operates as a control qubit for the gate, equals |1> in the tensor product quantum state.

When implementing a cluster of non-quantum computers, each gate is either a local gate if it involves only local qubit(s), or a remote gate if involving at least one remote qubit. Being local or remote applies to target qubits but also to control qubits if any for an identified gate. A local gate can be executed separately by each node, and thus does not use communication resources. Executing a remote gate requires gathering within each of the nodes the amplitude values that relate to each remote target qubit involved with the gate, using the communication resources of the cluster to this purpose. Then, communications between the nodes for transforming the remote gates into local gates form a bottleneck which limits the capability of the cluster to simulation-execute the quantum algorithm, in particular due to communication time and bandwidth with respect to the number of remote qubits and the number of remote gates in the quantum circuit.

Furthermore, it is common optimizing and/or rewriting a quantum circuit that corresponds to the quantum algorithm into another quantum circuit, also corresponding to the same quantum algorithm but optimized in efficiency and performance. For example, the optimization can address constraints and capabilities of an identified quantum hardware, such as a set of available gates, topological constraints including qubit connectivity, gate error rates and other hardware-specific limitations. Such quantum circuit transformation is called transpilation in the art, corresponding to compilation limited to within one and same coding level. Already known transpilation techniques separately include gate fusion, pattern-based diagonalization and gate localizing.

Gate fusion aims at optimizing an initial quantum circuit by merging adjacent initial gates together into a single gate, possibly larger than the initial gates. Different fusion strategies may prioritize gate-count reduction, circuit-depth reduction or criteria expressed in other quantum circuit metrics. Faster simulation-execution of the quantum algorithm results from gate fusion, in particular when gate-count reduction is prioritized.

Pattern-based diagonalization deals with replacing gate sequences that initially exist in an initial quantum circuit and match an identified gate pattern, with equivalent diagonal gates. Significant reduction of the quantum circuit is to be expected from such pattern-based diagonalization.

Gate localizing consists in suppressing remote gates that exist in an initial quantum circuit by adding one or more SWAP gates before in the quantum circuit. Each remote gate is thus replaced with a corresponding local gate combined with at least one preceding SWAP gate. Gate localizing aims at reducing the impact of remote gates onto simulation-execution time of a quantum algorithm using a cluster of non-quantum computers. In particular, it simplifies the implementation of the quantum circuit simulation in a cluster of non-quantum computers, eliminating the necessity for the implementation of remote gates with different numbers of qubits. Some optimizations can then be done to reduce the communication resources when simulation-executing the quantum algorithm.

Starting from this situation, one object of the present invention consists in making it easier to simulation-execute a quantum algorithm by using a cluster of non-quantum computers.

In particular, the invention aims at reducing the impact of remote gates onto simulation-execution time of a quantum algorithm using a cluster of non-quantum computers.

Another object of the present invention consists in reducing the need for large cluster communication resources when simulation-executing the quantum algorithm.

### -- SUMMARY OF THE INVENTION --

For meeting this object or others, a first aspect of the present invention proposes a new method of simulating execution of a quantum algorithm by using a cluster of non-quantum computers. Within the cluster, the non-quantum computers referred as to nodes are interconnected with each other so that any pair out of these nodes is capable of swapping values which are stored each in a respective one of both nodes of the pair.

The invention method comprises first transpiling an initial quantum circuit which corresponds to the quantum algorithm to obtain a final quantum circuit, and then having the nodes execute the quantum algorithm using the final quantum circuit. The initial quantum circuit comprises a sequence of ordered gates involving each at least one of a plurality of qubits, any gate being either local gate or remote gate with respect to the nodes as before. Transpiling the initial quantum circuit comprises first applying a pattern-based diagonalizing step to the initial quantum circuit so as to obtain a first intermediate quantum circuit, and then applying a gate localizing step to the first intermediate quantum circuit so as to obtain a second intermediate quantum circuit, and then generating the final quantum circuit from the second intermediate quantum circuit.

The pattern-based diagonalizing step as involved with the invention method comprises:
- providing at least one gate pattern that is equivalent to a corresponding diagonal gate; and
- for at least one gate sub-sequence in the initial quantum circuit that matches the gate pattern, replacing the gate sub-sequence with a corresponding replacement diagonal gate such that execution of the replacement diagonal gate is equivalent to execution of the gate sub-sequence.

The gate localizing step as involved with the invention method comprises adding at least one SWAP gate before at least one remote gate in the first intermediate quantum circuit so that this remote gate becomes local gate and execution of the at least one SWAP gate followed by the local gate is equivalent to execution of the remote gate up to a qubit permutation. At least one of the added SWAP gates is effective between a remote qubit involved with the remote gate and a local qubit not-involved with this remote gate.

Thus, the invention combines the advantages of transpiling by both pattern-based diagonalizing and gate localizing, but without adding SWAP gates for remote gates that matches the gate pattern involved in the pattern-based diagonalizing or one of them. This leads to minimizing the number of SWAP gates contained in the final quantum circuit, and therefore contributes to saving communication resources in the cluster of non-quantum computers. It also contributes to reducing the simulation-execution time of the algorithm, also called run time, thanks to avoiding communication delays within the cluster.

Thanks to the invention method, the second intermediate quantum circuit is comprised of gates of one or several of the following types: SWAP gates, local gates, diagonal gates which may be either local or remote, and gates in which one or several remote qubits are control qubits but without any remote target qubit. These latter gates are thus remotely controlled gates operating as local gates with respect to the target qubits.

Most preferably, the gate pattern which is involved with the pattern-based diagonalizing step may be comprised of a set of one or more diagonal gates that are wrapped between an ordered set-preceding sequence of CNOT gates and an ordered set-following sequence of CNOT gates, these set-preceding and set-following sequences of CNOT gates being identical with respect to the qubits involved with the CNOT gates but reversed from each other with respect to execution order of these CNOT gates.

Also preferably, any diagonal gate, either local or remote, and any gate in which one or several remote qubits are control qubits but without any remote target qubit, that exist in the first intermediate quantum circuit, may be unchanged by the gate localizing step. Indeed, localizing such diagonal gates and remotely-controlled local gates is unnecessary since all these gates can be executed by the cluster of non-quantum computers without transmitting quantum state amplitudes between the non-quantum computers.

Advantageously in the invention method, transpiling of the initial quantum circuit may further comprise a gate fusion step which is applied to the second intermediate quantum circuit after the gate localizing step. The final quantum circuit is then generated from a result of the gate fusion step. This gate fusion step comprises at least one of:
- for at least two local gates that are contained in the second intermediate quantum circuit without any intermediate remote gate, merging these local gates into a corresponding first fusion gate so that execution of the first fusion gate is equivalent to execution of the local gates. Possibly, some of the local gates to be merged as they are contained in the second intermediate quantum circuit may share at least one common qubit;
- for at least two diagonal gates that are successive in the second intermediate quantum circuit without any intermediate gate, merging these successive diagonal gates into a corresponding second fusion gate so that execution of the second fusion gate is equivalent to execution of the successive diagonal gates; and
- for at least two gates in which one or several remote qubits are control qubits but without any remote target qubit, referred to as remotely-controlled local gates, that are successive in the second intermediate quantum circuit without any intermediate gate and the successive remotely-controlled local gates having identical control qubits, merging these successive remotely-controlled local gates into a corresponding third fusion gate so that execution of the corresponding third fusion gate is equivalent to execution of the successive remotely-controlled local gates.

Thus, the invention method also benefits from the advantages brought by the gate fusion step.

Preferably, any SWAP gate that has been added in the gate localizing step may be unchanged by the gate fusion step. Advantages resulting from not modifying the added SWAP gates thus apply.

A second aspect of the invention proposes a computer-program product that comprises instruction codes suitable for transpiling an initial quantum circuit that is intended to be simulation-executed by a cluster of non-quantum computers. The non-quantum computers referred as to nodes are interconnected with each other so that any pair out of these nodes is capable of swapping values which are stored each in a respective one of both nodes of the pair. Each qubit and also each gate may be either local or remote with respect to the nodes as before. The instruction codes make a computer system that runs the computer-program product from an initial quantum circuit execute the following steps /1/ and /2/:
/1/ a pattern-based diagonalizing step applied to the initial quantum circuit so as to obtain a first intermediate quantum circuit, and comprising:
   - providing at least one gate pattern that is equivalent to a corresponding diagonal gate; and
   - for at least one gate sub-sequence in the initial quantum circuit that matches the gate pattern, replacing the gate sub-sequence with a corresponding replacement diagonal gate such that execution of the replacement diagonal gate is equivalent to execution of the gate sub-sequence; then
/2/ a gate localizing step applied to the first intermediate quantum circuit, and comprising adding at least one SWAP gate before at least one remote gate in the first intermediate quantum circuit so that the remote gate becomes local gate and execution of the at least one SWAP gate followed by the local gate is equivalent to execution of the remote gate up to a qubit permutation, at least one of the added SWAP gates being effective between a remote qubit involved with the remote gate and a local qubit not-involved with this remote gate, so that the second intermediate quantum circuit is comprised of gates of one or several of the following types: SWAP gates, local gates, diagonal gates which may be either local or remote, and gates in which one or several remote qubits are control qubits but without any remote target qubit.

The computer-program product thus allows implementing a method of simulation-execution of a quantum algorithm according to the first invention aspect, using a cluster of several non-quantum computers.

The gate pattern which is involved with the pattern-based diagonalizing step may be identical to the most preferred one recited in the first invention aspect.

Preferably, the instruction codes may be such that any diagonal gate and any gate in which one or several remote qubits are control qubits but without any remote target qubit, that exist in the first intermediate quantum circuit, may be unchanged by the gate localizing step.

Advantageously, the instruction codes may make the computer system further execute the following additional step /3/ after step /2/:
/3/ a gate fusion step applied to the second intermediate quantum circuit, comprising at least one of:
- for at least two local gates that are contained in the second intermediate quantum circuit without any intermediate remote gate, merging these local gates into a corresponding first fusion gate so that execution of the first fusion gate is equivalent to execution of the local gates;
- for at least two diagonal gates that are successive in the second intermediate quantum circuit without any intermediate gate, merging the successive diagonal gates into a corresponding second fusion gate so that execution of the second fusion gate is equivalent to execution of the successive diagonal gates; and
- for at least two gates in which one or several remote qubits are control qubits but without any remote target qubit, referred to as remotely-controlled local gates, that are successive in the second intermediate quantum circuit without any intermediate gate and the successive remotely-controlled local gates having identical control qubits, merging the successive remotely-controlled local gates into a corresponding third fusion gate so that execution of the corresponding third fusion gate is equivalent to execution of the successive remotely-controlled local gates.

Preferably, the instruction codes may be such that any SWAP gate that has been added in the gate localizing step is unchanged by the gate fusion step.

### -- BRIEF DESCRIPTION OF THE DRAWINGS --

Figure 1 shows a cluster of non-quantum computers that may be used for implementing the invention method.
Figure 2 illustrates successive steps of an implementation of the invention method.
Figures 3a and 3b illustrate execution of a pattern-based diagonalization step as involved in the method of Figure 2.
Figures 4a and 4b illustrate execution of a gate localizing step as involved in the method of Figure 2.
Figures 5a-5c illustrate an advantage of executing the pattern-based diagonalization step before the gate localizing step.
Figures 6a and 6b illustrate execution of a gate fusion step as involved in the method of Figure 2.

### -- DETAILED DESCRIPTION OF THE INVENTION --

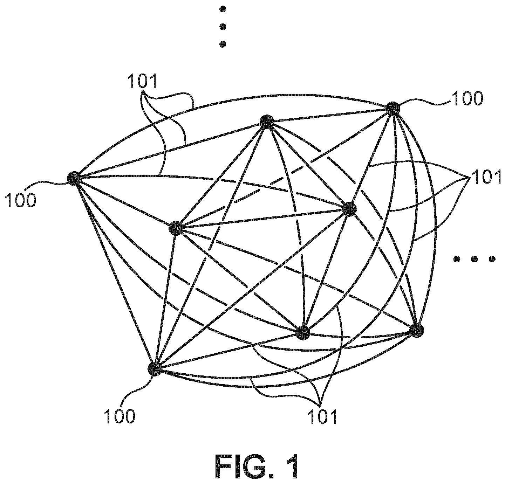

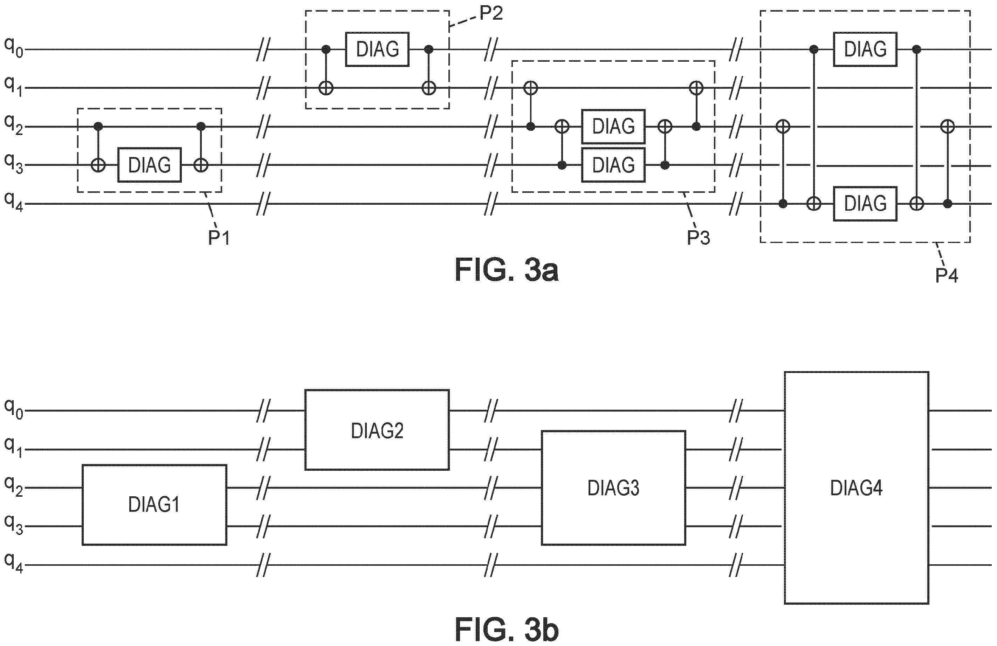

A cluster of non-quantum computers which can be used for implementing the invention is symbolically represented in Figure 1. Reference number 100 denotes any of the non-quantum computers in the cluster, with only eight of them represented in the figure, and reference number 101 denotes any communication link that interconnects the non-quantum computers 100. Each non-quantum computer 100 is commonly referred to as a node within the cluster. The communication links 101 may be of any type known in the art regarding its hardware and software structures, so that the interconnected nodes 100 form a network allowing distributed simulation-execution of quantum algorithms. In particular, the nodes 100 are used for storing quantum state amplitude values, and are capable to execute gates that operate only with amplitude values which are stored together in one of the nodes. Each of the communication links 101 is suitable for swapping quantum state amplitude values which are stored separately in both nodes connected to each other by this communication link. Using the numbers n and N as defined in the general part of the present description, Figures 3a-3b, 4a-4b, 5a-5c and 6a-6b correspond to n and N respectively equalling 3 and 5. In such simplified example, the cluster comprises 8 nodes 100 and each quantum state is determined by 32 complex amplitude values. Hence, a quantum state is a tensor product of five qubits which are respectively denoted q₀, q₁, q₂, q₃ and q₄. The amplitude values of each quantum state are supposed to be stored in the nodes 100 in a distributed manner as also described in the general part of the present description. In the sequel, q₀, q₁ and q₂ are assumed to be local qubits, and q₃ and q₄ remote qubits.

Any quantum circuit is comprised of an ordered sequence of gates each operating onto at least one of the qubits. In Figures 3a-3b, 4a-4b, 5a-5c and 6a-6b, execution order of the gates is from left side to right side. A gate that involves only local qubits is said to be local gate, and a gate that involves at least one remote qubit is remote gate. If all qubits that are modified or combined by a gate, commonly called target qubits, are local qubits, the gate can be executed as such by the nodes 100, i.e. without transmission of quantum state amplitudes through the communication links 101, even if it additionally involves one or several local or remote control qubits. Such gates with only local target qubit(s) but with remote control qubit(s) have been called remotely-controlled local gates in the general part of the present description. Control qubits and to target qubits are well-known in quantum computing, so that it is unnecessary to define them again here. If a gate modifies at least one remote qubit or combines several qubits including a remote one, direct execution of such remote gate by the nodes 100 is not possible.

In a known manner, a quantum algorithm is executed in form of a quantum circuit, and it is most often beneficial to equivalence-transform this quantum circuit for physical implementation issue or any other purpose. Such transformation of the quantum circuit is commonly referred to as compilation, or transpilation when implemented within one and same coding level. Hence, transpilation is applied to an initial quantum circuit which corresponds to the quantum algorithm, and results in a final quantum circuit also corresponding to the quantum algorithm.

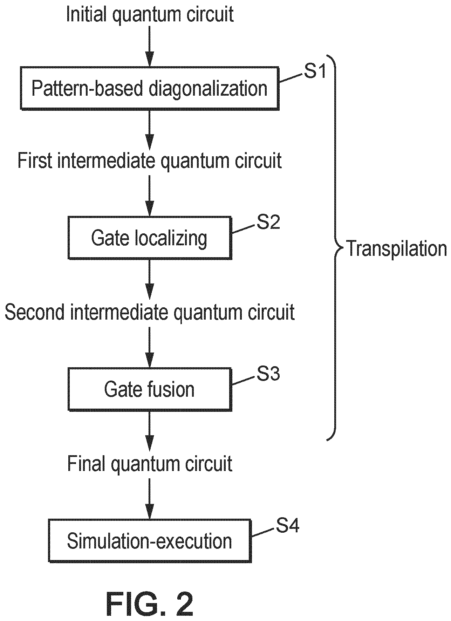

The invention method for simulation-executing a quantum algorithm comprises the ordered step sequence displayed in Figure 2 and now recited:
- applying first a pattern-based diagonalization step S1 to the initial quantum circuit, resulting in a first intermediate quantum circuit;
- then applying a gate localizing step S2 to the first intermediate quantum circuit, resulting in a second intermediate quantum circuit; and
- then optionally applying a gate fusion step S3 to the second intermediate quantum circuit, resulting in the final quantum circuit.

These steps S1 to S3 form together transpilation of the initial quantum circuit, and the quantum algorithm can then be simulation-executed in an optimized manner by using the final quantum circuit with the cluster of non-quantum computers 100, corresponding to step S4. Possibly, the transpilation steps can be performed by a computer system different from the cluster of non-quantum computers 100. Steps S1 to S3 are now described in detail together with the advantages of their above execution order. CNOT gates and SWAP gates are assumed to be basic knowledge in the field of quantum computing, so that descriptions thereof are deemed unnecessary in the present description. Numerous open references are available about CNOT and SWAP gates if necessary. Each CNOT gate is represented as a vertical segment that connects its control qubit appearing as a dark-filled disk to its target qubit appearing as a plus symbol in a circle. Swapped qubits are indicated by diagonal crosses connected by a vertical segment for each SWAP gate.

### Pattern-based diagonalization step S1:

Figure 3a shows several gate patterns P1, P2, P3 and P4 contained in the initial quantum circuit. Each gate pattern is defined by a corresponding gate sub-sequence irrespective of the qubits involved. For example, gate pattern P1 is comprised of a diagonal single-qubit gate noted DIAG which is wrapped between two CNOT gates that have same control qubit (q₂) and share target qubit (qs) with the diagonal single-qubit gate. Gate pattern P2 is different from gate pattern P1 because the control qubit of both CNOT gates is the target bit of the single-qubit gate DIAG. P3 and P4 are occurrences of a same gate pattern but with different qubits involved. This gate pattern is comprised of two diagonal single-qubit gates, noted DIAG again, which are wrapped between two CNOT gate pairs that are identical but reversed in execution order from each other. Gate pattern occurrence P3 involves q₁-, q₂- and qs-qubits, and gate pattern occurrence P4 involves q₀-, q₂- and q₄-qubits for illustration.

As shown in Figure 3b, each occurrence of gate patterns P1 and P2 is replaced with a two-qubit diagonal gate which operates on the corresponding qubits. The replacement gates are noted DIAG1 for gate pattern P1 and DIAG2 for gate pattern P2. Each occurrence of gate pattern P3 and P4 is replaced with a three-qubit diagonal gate DIAG3 and DIAG4, respectively, which operates again each time on the corresponding qubits. Figure 3b thus illustrates the first intermediate quantum circuit.

More generally but not limitedly, gate patterns to be used may be comprised of any number of single-qubit or multiple-qubit diagonal gates wrapped between two CNOT-gate sequences that are identical but reversed in execution order. The numbers of involved target qubits and control qubits may be any. In addition, pattern-based diagonalization applies irrespective of the target and control qubits involved in each occurrence of a gate pattern being local or remote.

### Gate localizing step S2:

A remote gate that involves only one remote qubit can be transformed into a local gate by first executing a SWAP gate which exchanges the remote qubit with one of the local qubits in the distribution of the amplitude values as stored by the nodes 100. If the remote gate involves several remote qubits, at least one SWAP gate is to be added before the remote gate for each of its remote qubits, so as to exchange them with respective different ones of the local qubits. The initial remote gate is thus transformed into a local gate preceded by the SWAP gate(s). In both cases, the remote gate can then be executed by the node cluster by first executing the SWAP gate(s) and then the gate transformed from initial remote type to local type. Actually, such remote-gate transformation changes the qubit distribution implemented for storage of the quantum state amplitude values in all the nodes 100, but such qubit permutation can be tracked through qubit routing and propagated to the next gates in the quantum circuit.

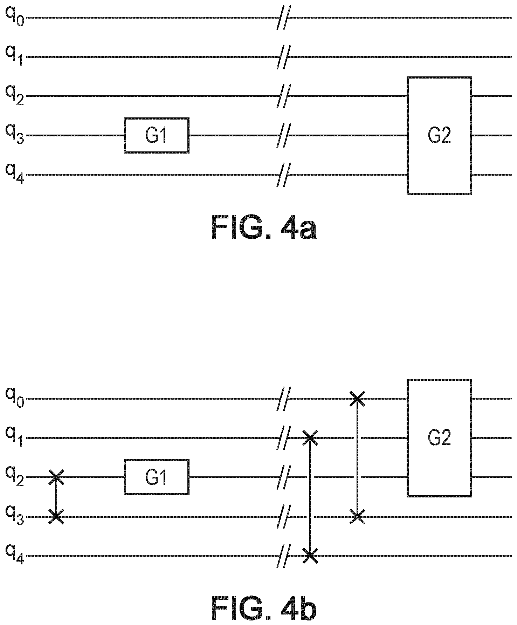

As an example, Figure 4a shows remote single-qubit gate G1 and three-qubit gate G2 belonging to the first intermediate quantum circuit. Gate G1 involves remote qs-qubit. Insertion of one SWAP gate before remote gate G1 as shown in Figure 4b transforms it into a local gate noted G1 again but involving q₂-qubit, such that execution of the SWAP gate followed by the localized G1-gate is equivalent to execution of the initial remote G1-gate with subsequent permutation between q₂- and qs-qubit. Remote gate G2 involves two remote qubits and one local qubits. Localizing of remote gate G2 is performed by swapping each of its remote qubits with a respective local qubit not involved with the remote gate G2. Figures 4b corresponds to the second intermediate quantum circuit.

All diagonal gates, local and remote, can be executed by the node cluster without quantum state amplitudes being exchanged through the communication links 101. Also the remotely-controlled local gates do not require exchanges of quantum state amplitudes for execution. For this reason, diagonal gates, local and remote, and remotely-controlled local gates which exist in the first intermediate quantum circuit, are preferably not concerned with the gate localizing step S2.

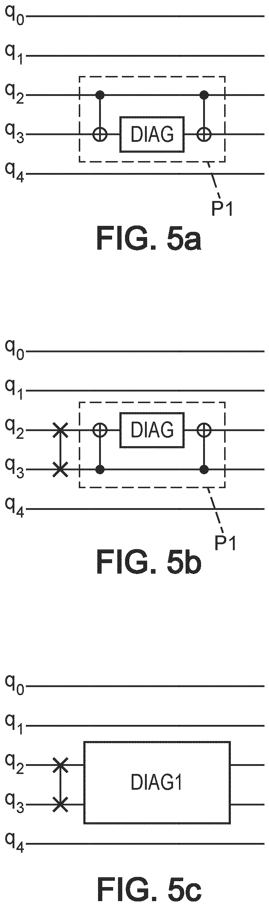

For comparison, Figures 5a-5c illustrate the second intermediate quantum circuit that would result from execution of the gate localizing step S2 before the pattern-based diagonalization step S1 for gate pattern P1 involving q₂-qubit as control qubit and qs-qubit as target qubit (Figure 5a). Because the single-qubit diagonal gate DIAG and both CNOT gates have remote target qubit, i.e. qs-qubit, first executing the gate localizing step S2 would result in adding a SWAP gate before the gate pattern, for example a SWAP gate between q₂- and qs-qubits, such that the common target qubit of the CNOT gates and the localized diagonal gate DIAG becomes q₂-qubit and remaining remote qubit q₃ is control qubit, as shown in Figure 5b. The pattern-based diagonalization step S1 executed thereafter would replace the gate pattern P1 of Figure 5b with the same two-qubit diagonal gate DIAG1 as in left part of Figure 3b but exchanged between q₂- and qs-qubits, and preceded by the remaining previously-added SWAP gate as shown in Figure 5c. This inverse execution order between steps S1 and S2 is detrimental since the added SWAP gate involves communication resources within the non-quantum computer cluster, but is useless because the replacement gate DIAG1 is diagonal and thus does not require being localized. The resulting gate sequence of Figure 5c is to be compared to the first left part of Figure 3b which corresponds to the invention step execution order of first the pattern-based diagonalization step S1 then the gate localizing step S2. Actually, the number of uselessly added SWAP gates when executing step S2 before step S1 increases with the number of remote qubits that are involved with the initial gate pattern.

After execution of steps S1 then S2 according to the invention from the initial quantum circuit, the second intermediate quantum circuit comprises only gates of the following types:
- remote SWAP gates, which have been added in the gate localizing step S2;
- local gates;
- diagonal gates, which may be either local or remote; and
- remotely-controlled local gates, in which one or several remote qubits are control qubits but without any remote target qubit.

As mentioned above, all diagonal gates, local and remote, and all remotely-controlled local gates do not require exchanges of quantum state amplitudes for execution. Only the remote SWAP gates among all gates in the second intermediate quantum circuit require transmitting amplitudes of quantum states between some of the nodes 100. All other gates in the second intermediate quantum circuit are executed by the node cluster without transmission of quantum state amplitudes between any of the nodes 100. Saving in communication resources is thus obtained, as well as reduction in the run time of the quantum algorithm. It is also crucial minimizing the SWAP-gate number by executing step S1 before step S2 as explained before.

### Gate fusion step S3:

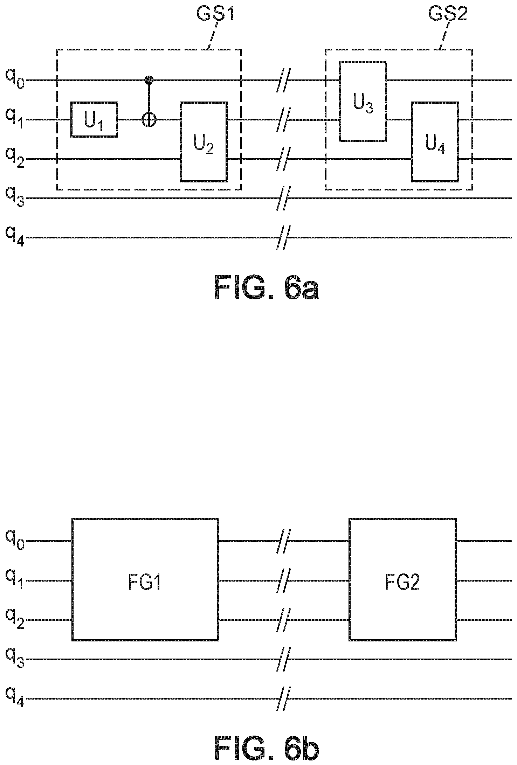

The gate fusion step S3 may be defined by the gate transformations it implements for the four gate types existing in the second intermediate quantum circuit as recited before:
- remote SWAP gates: they remain unchanged by the gate fusion step S3;
- local gates: same fusion strategy as commonly implemented in a single non-quantum computer executing a quantum algorithm can be used. Figures 6a shows two exemplifying sub-sequences of local gates GS1 and GS2 existing in the second intermediate quantum circuit. Sub-sequence GS1 is comprised of gates U₁ and U₂ with an intermediate CNOT gate, and sub-sequence GS2 is comprised of gates U₃ and U₄. Gate fusion step S3 transforms the local gate sub-sequences GS1 and GS2 into respective fusion gates FG1 and FG2 in the final quantum circuit as shown in Figure 6b. Fusion gates resulting from step S3 are local too;
- diagonal gates, either local or remote: they can be merged together, in particular when several diagonal gates share some of their target qubits. The resulting fusion gates are also diagonal, so that they can be simulation-executed by the node cluster without any communication of quantum state amplitudes through the communication links 101; and
- remotely-controlled local gates: such gates having exactly the same set of control qubits can be merged together, and the resulting fusion gate remains controlled by the same set of control qubits as the initial remotely-controlled local gates. The resulting fusion gate can be simulation-executed by the node cluster again without any communication of quantum state amplitudes through the communication links 101.

Such gate fusion step S3 may be implemented for reducing gate count and/or circuit depth in the final quantum circuit. Preserving the controlled gates and diagonal gates in the gate fusion step S3 ensures that no extra SWAP gate is inserted, thereby minimizing again the communication resources that are necessary within the node cluster for the simulation-execution of the quantum algorithm.

The final quantum circuit is then to be simulation-executed by the node cluster of Figure 1, corresponding to step S4 in Figure 2.

The invention can obviously be applied to any qubit number N larger than that considered above for simplified exemplifying purpose, and also to any number of non-quantum computers in the cluster, provided that this computer number is less than 2^{N}.

The inventors now compare numbers of SWAP gates added for gate localizing and run time values as resulting from implementing step S1 (pattern-based diagonalization) then step S2 (gate localizing) then step S3 (gate fusion), with corresponding values resulting from implementing first step S3 (gate fusion) then step S2 (gate localizing) without pattern-based diagonalization step. First implementation which meets the invention is labelled S1+S2+S3, and second implementation which does not use the invention is labelled S3+S2. These comparisons relate to Quantum Approximate Optimization Algorithm circuits, commonly known as QAOA circuits, at depth 5, ranging from 30 to 37 qubits. The constraints of the QAOA circuits are generated randomly, but the total number of these constraints is fixed to control the number of gates in the circuits. Benchmarking is performed first using a cluster of sixteen interconnected computing nodes, corresponding to n equaling 4, each node consisting of two AMD Milan 7763 processors and sixty-four cores on each socket. The number of remote qubits is four. Each node is equipped with 256 GB of RAM: 16 x 16 GB DDR4-3200 Dual Rank, which means that the maximal number of qubits that can be simulated in double precision on a single node, i.e. local qubits, is 33 qubits (34 local qubits will need 256 GB of memory which hits the limit). The nodes are interconnected by Infiniband HDR100 interconnect.

Table 1 below displays the numbers of added SWAP gates, denoted Nsw, and the run time values in seconds (s) for two transpiled quantum algorithms, respectively with 120 and 300 constraints, for different numbers of qubits and S1+S2+S3 vs S3+S2 implementations:

**Table 1**

| Qubit number | 120 constraints | | | | 300 constraints | | | |
|---|---|---|---|---|---|---|---|---|
| | S1+S2+S3 | | S3+S2 | | S1+S2+S3 | | S3+S2 | |
| | N_{SW} | Run time (s) | N_{SW} | Run time (s) | N_{SW} | Run time (s) | N_{SW} | Run time (s) |
| 30 | 8 | 5.813 | 13 | 9.093 | 8 | 8.104 | 28 | 19.624 |
| 31 | 8 | 11.425 | 11 | 13.887 | 8 | 17.228 | 30 | 34.285 |
| 32 | 8 | 16.009 | 13 | 30.860 | 8 | 35.117 | 29 | 58.851 |
| 33 | 8 | 34.743 | 12 | 57.921 | 8 | 50.922 | 27 | 115.180 |
| 34 | 8 | 71.638 | 11 | 83.641 | 8 | 89.830 | 24 | 179.044 |
| 35 | 8 | 121.726 | 10 | 164.310 | 8 | 167.902 | 23 | 365.510 |
| 36 | 8 | 232.326 | 13 | 364.204 | 8 | 315.539 | 28 | 819.677 |
| 37 | 8 | 461.654 | 8 | 621.043 | 8 | 686.153 | 25 | 1513.802 |

One can observe that the invention transpilation method S1+S2+S3 results in the least numbers of added SWAP gates for any qubit and constraint numbers, although the S3+S2 transpilation method achieves same Nsw-value for 37 qubits and 120 constraints. In addition, the transpilation method S1+S2+S3 records best run times for all qubit and constraint numbers.

Using the invention method S1+S2+S3 to transpile the QAOA circuits, the number of added SWAP gates does not increase with the number of qubits and the number of constraints. In fact, this number of SWAP gates added by the S1+S2+S3 method only depends on the remote qubit number in this case. All operations in the QAOA circuits that represent the constraints are diagonal after the pattern-based diagonalization step S1, which can be simulation-executed directly without inserting additional SWAP gates. Therefore, the only remote gates after the pattern-based diagonalization step S1 are the Hadamard and Pauli X-rotation gates existing in the initial quantum circuit. The result of pruning of remote SWAP gates is reflected in the run time values, as these remote SWAP gates require communication between the nodes 100, thus consuming more time. Compared to the circuits transpiled using the S3+S2 method, the S1+S2+S3 invention method achieves a performance up to three times in some cases. These observations are still valid for larger quantum circuits with more qubits, since the difference in the number of added SWAP gates will only increase.

Table 2 below displays the numbers Nsw of added SWAP gates and the run time values for the same QAOA circuits as before, completed with values for 180 and 240 constraints, again with depth 5 but with 40 qubits, when simulation-executed using the above-methods S1+S2+S3 and S3+S2 in a cluster comprised of 128 nodes, corresponding to n equaling 7, thus seven remote qubits and again 33 local qubits per node:

**Table 2**

| Transpilation method | 120 constraints | | 180 constraints | | 240 constraints | | 300 constraints | |
|---|---|---|---|---|---|---|---|---|
| | N_{SW} | Run time (s) | Nsw | Run time (s) | N_{SW} | Run time (s) | N_{SW} | Run time (s) |
| S1+S2+S3 | 14 | 700.682 | 14 | 736.395 | 14 | 865.699 | 14 | 888.608 |
| S3+S2 | 16 | 1051.203 | 30 | 1705.922 | 39 | 2118.598 | 41 | 2402.090 |

The invention transpilation method S1+S2+S3 provides the least numbers of added SWAP gates and the shortest run time values.

Thus, it is confirmed that the number of added SWAP gates is reduced significantly using the invention method when a larger quantum circuit is used with high number of remote qubits. This leads to shortened run time values when simulating execution of the compiled quantum circuits on large node clusters.

## Claims

1. A method of simulating execution of a quantum algorithm by using a cluster of non-quantum computers, the non-quantum computers referred as to nodes (100) being interconnected with each other so that any pair out of said nodes is capable of swapping values which are stored each in a respective one of both nodes of the pair,
wherein a quantum state is a tensor-product of ordered qubits, comprising local qubits and remote qubits, with amplitude values of the quantum state that correspond to two tensor-product base states which differ through base states of a single one of the qubits being stored either in a same one of the nodes (100) if the differentiating qubit is local, or stored in two separate ones of the nodes if the differentiating qubit is remote,
wherein an initial quantum circuit corresponding to the quantum algorithm comprises a sequence of ordered gates involving each at least one of the qubits, any gate being either local gate if involving only local qubit(s), or remote gate if involving at least one remote qubit,
wherein the method comprises first transpiling the initial quantum circuit to obtain a final quantum circuit, and then having the nodes (100) execute the quantum algorithm using the final quantum circuit,
wherein transpiling the initial quantum circuit comprises first applying a pattern-based diagonalizing step (S1) to the initial quantum circuit so as to obtain a first intermediate quantum circuit, and then applying a gate localizing step (S2) to the first intermediate quantum circuit so as to obtain a second intermediate quantum circuit, and then generating the final quantum circuit from the second intermediate quantum circuit,
wherein the pattern-based diagonalizing step (S1) comprises:
- providing at least one gate pattern that is equivalent to a corresponding diagonal gate; and
- for at least one gate sub-sequence in the initial quantum circuit that matches the gate pattern, replacing the gate sub-sequence with a corresponding replacement diagonal gate such that execution of the replacement diagonal gate is equivalent to execution of the gate sub-sequence,
and the gate localizing step (S2) comprises adding at least one SWAP gate before at least one remote gate in the first intermediate quantum circuit so that said remote gate becomes local gate and execution of the at least one SWAP gate followed by the local gate is equivalent to execution of the remote gate up to a qubit permutation, at least one of the added SWAP gates being effective between a remote qubit involved with the remote gate and a local qubit not-involved with said remote gate, so that the second intermediate quantum circuit is comprised of gates of one or several of the following types: SWAP gates, local gates, diagonal gates, and gates in which one or several remote qubits are control qubits but without any remote target qubit.

2. The method of claim 1, wherein the gate pattern involved with the pattern-based diagonalizing step (S1) is comprised of a set of one or more diagonal gates wrapped between an ordered set-preceding sequence of CNOT gates and an ordered set-following sequence of CNOT gates, the set-preceding and set-following sequences of CNOT gates being identical with respect to the qubits involved with the CNOT gates but reversed from each other with respect to execution order of said CNOT gates.

3. The method of claim 1 or 2, wherein any diagonal gate and any gate in which one or several remote qubits are control qubits but without any remote target qubit, that exist in the first intermediate quantum circuit, is unchanged by the gate localizing step (S2).

4. The method of one of the preceding claims, wherein transpiling the initial quantum circuit further comprises a gate fusion step (S3) applied to the second intermediate quantum circuit after the gate localizing step (S2), and the final quantum circuit being generated from a result of the gate fusion step, the gate fusion step comprising at least one of:
- for at least two local gates that are contained in the second intermediate quantum circuit without any intermediate remote gate, merging said local gates into a corresponding first fusion gate so that execution of the first fusion gate is equivalent to execution of said local gates;
- for at least two diagonal gates that are successive in the second intermediate quantum circuit without any intermediate gate, merging the successive diagonal gates into a corresponding second fusion gate so that execution of the second fusion gate is equivalent to execution of said successive diagonal gates; and
- for at least two gates in which one or several remote qubits are control qubits but without any remote target qubit, referred to as remotely-controlled local gates, that are successive in the second intermediate quantum circuit without any intermediate gate and the successive remotely-controlled local gates having identical control qubits, merging said successive remotely-controlled local gates into a corresponding third fusion gate so that execution of the corresponding third fusion gate is equivalent to execution of the successive remotely-controlled local gates.

5. The method of claim 4, wherein any SWAP gate added in the gate localizing step (S2) is unchanged by the gate fusion step (S3).

6. A computer-program product, comprising instruction codes suitable for transpiling an initial quantum circuit that is intended to be simulation-executed by a cluster of non-quantum computers, the non-quantum computers referred as to nodes (100) being interconnected with each other so that any pair out of said nodes is capable of swapping values which are stored each in a respective one of both nodes of the pair,
wherein a quantum state is a tensor-product of ordered qubits, comprising local qubits and remote qubits, with amplitude values of the quantum state that correspond to two tensor-product base states which differ through base states of a single one of the qubits being stored either in a same one of the nodes (100) if the differentiating qubit is local, or stored in two separate ones of the nodes if the differentiating qubit is remote,
the initial quantum circuit being comprised of a sequence of ordered gates involving each at least one of the qubits, any gate being either local gate if involving only local qubit(s), or remote gate if involving at least one remote qubit,
**characterized in that** the instruction codes make a computer system that runs the computer-program product from the initial quantum circuit execute the following steps /1/ and /2/:
/1/a pattern-based diagonalizing step (S1) applied to the initial quantum circuit so as to obtain a first intermediate quantum circuit, and comprising:
- providing at least one gate pattern that is equivalent to a corresponding diagonal gate; and
- for at least one gate sub-sequence in the initial quantum circuit that matches the gate pattern, replacing the gate sub-sequence with a corresponding replacement diagonal gate such that execution of the replacement diagonal gate is equivalent to execution of the gate sub-sequence; then
/2/ a gate localizing step (S2) applied to the first intermediate quantum circuit, and comprising adding at least one SWAP gate before at least one remote gate in the first intermediate quantum circuit so that said remote gate becomes local gate and execution of the at least one SWAP gate followed by the local gate is equivalent to execution of the remote gate up to a qubit permutation, at least one of the added SWAP gates being effective between a remote qubit involved with the remote gate and a local qubit not-involved with said remote gate, so that the second intermediate quantum circuit is comprised of gates of one or several of the following types: SWAP gates, local gates, diagonal gates, and gates in which one or several remote qubits are control qubits but without any remote target qubit.

7. The computer-program product of claim 6, wherein the instruction codes are such that the gate pattern involved with the pattern-based diagonalizing step (S1) is comprised of a set of one or more diagonal gates wrapped between an ordered set-preceding sequence of CNOT gates and an ordered set-following sequence of CNOT gates, the set-preceding and set-following sequences of CNOT gates being identical with respect to the qubits involved with the CNOT gates but reversed from each other with respect to execution order of said CNOT gates.

8. The computer-program product of claim 6 or 7, wherein the instruction codes are such that any diagonal gate and any gate in which one or several remote qubits are control qubits but without any remote target qubit, that exist in the first intermediate quantum circuit, is unchanged by the gate localizing step (S2).

9. The computer-program product of claim 6 to 8, wherein the instruction codes make the computer system further execute the following additional step /3/ after step /2/:
/3/ a gate fusion step (S3) applied to the second intermediate quantum circuit, comprising at least one of:
- for at least two local gates that are contained in the second intermediate quantum circuit without any intermediate remote gate, merging said local gates into a corresponding first fusion gate so that execution of the first fusion gate is equivalent to execution of the local gates;
- for at least two diagonal gates that are successive in the second intermediate quantum circuit without any intermediate gate, merging the successive diagonal gates into a corresponding second fusion gate so that execution of the second fusion gate is equivalent to execution of said successive diagonal gates; and
- for at least two gates in which one or several remote qubits are control qubits but without any remote target qubit, referred to as remotely-controlled local gates, that are successive in the second intermediate quantum circuit without any intermediate gate and the successive remotely-controlled local gates having identical control qubits, merging said successive remotely-controlled local gates into a corresponding third fusion gate so that execution of the corresponding third fusion gate is equivalent to execution of said successive remotely-controlled local gates.

10. The computer-program product of claim 9, wherein the instruction codes are such that any SWAP gate added in the gate localizing step (S2) is unchanged by the gate fusion step (S3).
